# EUROPEAN PATENT SPECIFICATION

(11) **EP 3 267 095 B1**
(45) Date of publication and mention of the grant of the patent: **23.08.2023**
(21) Application number: 17177248.6
(22) Date of filing: 21.06.2017
(51) Int. Cl.: F21S 41/176, F21S 41/20, F21V 13/14, F21V 9/32

(54) **LIGHTING DEVICE INCLUDING A PHOSPHOR PLATE**
BELEUCHTUNGSVORRICHTUNG MIT PHOSPHORPLATTE
DISPOSITIF D'ÉCLAIRAGE COMPRENANT UNE PLAQUE DE PHOSPHORE

(30) Priority: 22.06.2016 KR 20160078012
(43) Date of publication of application: 10.01.2018
(73) Proprietor: LG Innotek Co., Ltd., Seoul 04637 (KR)
(72) Inventor: KIM, Won Jin, Seoul 04637 (KR); WON, Ju Yeon, Seoul 04637 (KR); LEE, In Jae, Seoul 04637 (KR)
(74) Representative: Novagraaf Technologies

(56) References cited:
- EP-A2- 2 738 888
- WO-A1-2012/128384
- WO-A1-2015/170696
- WO-A1-2017/040433
- US-A1- 2014 169 024
- US-A1- 2015 102 722
- US-B2- 8 708 511

## Description

### CROSS-REFERENCE TO RELATED APPLICATION

This application claims priority to Korean Patent Application No. 2016-0078012, filed on June 22, 2016.

### BACKGROUND

### 1. Field of the Invention

The present invention relates to a lighting device including a phosphor plate, specifically a lighting device which can be used in a lamp for vehicles.

### 2. Discussion of Related Art

A luminous element is an element that converts electricity into light. Main luminous elements include a Light Emitting Diode(LED), a Laser Diode(LD), a laser, and the like.

Recently, as a demand for a high efficiency, low power lighting device has increased, research on a lighting device using a laser, a LD, a high power light emitting diode, and the like as a light source is being conducted. Particularly, in a field of vehicles where energy saving has become an issue, there is an attempt to replace existing light sources used in head lamps with a laser, a LD, or a high power light emitting diode.

Such a laser, a LD, or a high power light emitting diode emits an excitation ray which has a wavelength of 500 mm or less. If the human body is exposed to an excitation ray which has a wavelength of 500 mm or less, the excitation ray may cause harmful effects on the human body such as visual impairment, burns, and the like. Accordingly, a lighting device using a laser, a LD, or a high power light emitting diode as a light source needs to include a conversion device which converts an excitation ray from a phosphor to a visible ray, and a phosphor plate which includes a phosphor may be used as a conversion device. For example, a blue light, which is output from a low-wavelength light source emitted with a spectrum having relatively thin width, may be converted to white light by passing through a phosphor plate which includes a phosphor.

On one hand, a performance of a lighting device may be controlled based on a diameter of a light emitting surface of the lighting device. For example, as a diameter of a light emitting surface of a lighting device becomes smaller, an energy density per area becomes too high and a phosphor plate may be damaged. On the other hand, in order to increase a diameter of a light emitting surface of a lighting device, the lighting device becomes larger, and hence it is difficult to miniaturize the structure of the lighting device.

Lighting devices are known from WO 2015/170696 A1 and EP 2 738 888 A2.

### SUMMARY OF THE INVENTION

The present invention provides a lighting device according to claim 1.

The lighting device of the invention is rendered to include a phosphor plate which has a different ratio in terms of the diameter of the light incident region and the diameter of the light emitting region, and thereby it is possible to easily adjust a performance of the lighting device by controlling the light emitting region of the lighting device without limiting a distance between the phosphor plate and the light source.

### BRIEF DESCRIPTION OF THE DRAWINGS

Fig. 1 is a cross sectional view of a lighting device according to an embodiment of the present invention.
Fig. 2 is a graph showing a function of an antireflection coating and a short wavelength pass filter.
Fig. 3 is a cross sectional view showing light output of a common lighting device.
Fig. 4a and Fig. 4b are cross sectional views showing a direction of progress of a white light based on a tilting angle of an opening of a housing.
Fig. 5a and Fig. 5b are cross sectional views showing a diameter of a light incident region of light which is incident on a phosphor plate and a diameter of a light emitting region of the phosphor plate.
Fig. 6a is a graph showing a diameter of a light incident region of light which is incident on a phosphor plate.
Fig. 6b is a graph showing a diameter of a light emitting region of a phosphor plate.
Fig. 7 is a block diagram of a method for producing a phosphor plate.

### DETAILED DESCRIPTION OF EXEMPLARY EMBODIMENTS

While the invention can allow various modifications and alternative embodiments, specific embodiments thereof are shown by way of example in the drawings and will be described hereafter. However, it should be understood that there is no intention to limit the invention to the particular embodiments disclosed.

It will be understood that although terms including ordinal numbers such as "first," "second," etc. may be used herein to describe various elements, these elements are not limited by these terms. The terms are used to distinguish one element from another. For example, a second element could be termed a first element without departing from the teachings of the present inventive concept, and similarly a first element could be also termed a second element. The term "and/or" includes any and all combination of one or more of the related listed items.

When an element is referred to as being "connected to" or "coupled with" another element, not only it can be directly connected or coupled to the other element, but also it can be understood that intervening elements may be present. In contrast, when an element is referred to as being "directly connected to" or "directly coupled with" another element, there are no intervening elements present.

The terminology used herein is for the purpose of describing particular embodiments only and is not intended to limit the present inventive concept. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, embodiments of the present invention will be described in detail with reference to the accompanying drawings, and regardless of the numbers in the drawings, the same or corresponding elements will be assigned with the same numbers and overlapping descriptions will be omitted.

Hereinafter, a lighting device according to embodiments of the present invention will be explained in detail by referring to accompanied drawings.

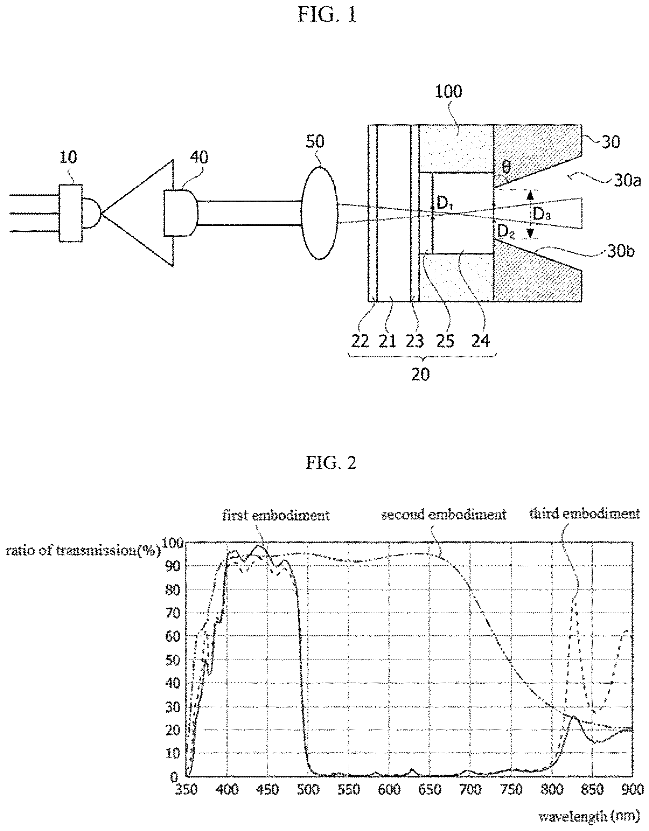

Fig. 1 is a cross sectional view of a lighting device according to an embodiment of the present invention.

As shown in Fig. 1, the lighting device according to an embodiment of the present invention comprises: a light source 10; a light conversion unit 20 which is disposed in a direction that light which is output from the light source 10 progresses and converts the output light; and a housing 30 which includes an opening 30a formed in a light emitting region of the phosphor plate 24 and adjusts light distribution.

The light source 10 may generate a blue laser ray which has 450 nm band of wavelength. The light generated from the light source 10 progresses to the light conversion unit 20. The light conversion unit 20 is rendered to be disposed in a direction in which the laser ray is released and to include a phosphor plate 24, so as to be able to output white light through the opening 30a of the housing by reacting the white light with the laser ray which belongs to a blue wavelength band released from the light source 10.

The light conversion unit 20 may transmit some part of the laser ray which belongs to the blue wavelength band released from the light source 10, and convert the other part of the laser ray so as to form a converted light which belongs to a yellow wavelength band. The light conversion unit 20 may generate white light by combining the laser ray and the converted light, and the white light may be released through the opening 30a of the housing 30.

The light conversion unit 20 includes, according to the invention, a substrate 21, an antireflection coating 22, a short wavelength pass filter and a phosphor plate 24.

The substrate 21 may include, but not be limited to, sapphires. The substrate 21 may offer a function of radiation of heat in which heat generated from the light output from the light source passing through the light conversion unit 20 or upon operating the light source 10 is transferred or released. The antireflection coating 22 which is coated onto a back surface of the substrate 21 is for maximizing the amount of the incident light by preventing the light from being reflected from the surface of the substrate 21 when the light output from the light source 10 is incident on the substrate 21.

The short wavelength pass filter 23 is disposed on the front surface of the substrate 21, and the short wavelength pass filter 23 is for blocking light which belongs to a particular wavelength band. For instance, the short wavelength pass filter 23 may block light which has a wavelength above 500 nm. The short wavelength pass filter 23 may be provided between the substrate 21 and the phosphor plate 24 and may re-reflect light in a direction towards the opening 30a, in which the light is a part of the converted light in the phosphor plate 24 and progresses in a direction towards the substrate 21 instead of the opening 30a.

Fig. 2 is a graph showing the function of antireflection coating and a short wavelength pass filter.

As shown in Fig. 2, in the case of the first embodiment which includes only the substrate (referred to as 21 in Fig. 1) and the short wavelength pass filter (referred to as 23 in Fig. 1), a light which has a wavelength band of approximately between 500 nm and 800 nm is blocked, and only light which belongs to the rest of the wavelength band is transmitted. In addition, in the case of the second embodiment which includes only the substrate (referred to as 21 in Fig. 1) and the antireflection coating (referred to as 22 in Fig. 1), all of the light emitted from the light source (referred to as 10 in Fig. 1) is transmitted, and in particularly, light absorption, which is caused by scattering and reflection of the light which belongs to the blue wavelength band (between 350 nm and 500 nm) generated from the light source (referred to as 10 in Fig. 1), may be minimized.

Furthermore, in the case of the third embodiment, which includes all of the substrate (referred to as 21 in Fig. 1), the short wavelength pass filter (referred to as 23 in Fig. 1), and the antireflection coating (referred to as 22 in Fig. 1), a light which has a wavelength band of approximately between 500 nm and 800 nm is blocked and at the same time a ratio of transmission of the light which belongs to the blue wavelength band may be improved.

Referring to Fig. 1 again, the phosphor plate 24 may be provided on a surface which is in contact with the housing 30, and may convert an absorbed light to a light which has a different wavelength and then may release the light. The phosphor plate 24 converts the incident laser ray to a light which belongs to a yellow wavelength band so as to generate a converted light, and the converted light forms a white light by being combined with the laser ray which passes through the phosphor plate 24. Between the said phosphor plate 24 and the short wavelength pass filter 23, a bonding layer 25 is further disposed, and thus the bonding layer 25 may enhance adhesion between the short wavelength pass filter 23 and the phosphor plate 24.

The housing 30 is connected to the light conversion unit 20 at the side of the light emitting region of the phosphor plate 24, and may include the opening 30a which exposes the light emitting region of the phosphor plate 24. That is to say, the housing 30 may expose a part of a front surface of the phosphor plate 24. Moreover, the housing 30 may be arranged to cover a part of the front surface of the phosphor plate 24. Accordingly, the light emitted from the light conversion unit 20 may be emitted directly to the outside through the opening 30a of the housing, or may be emitted to the outside by being reflected on an inside surface 30b of the housing which is inclined so as to have a tilting angle θ of less than 90° with respect to the light emitting region of the phosphor plate 24.

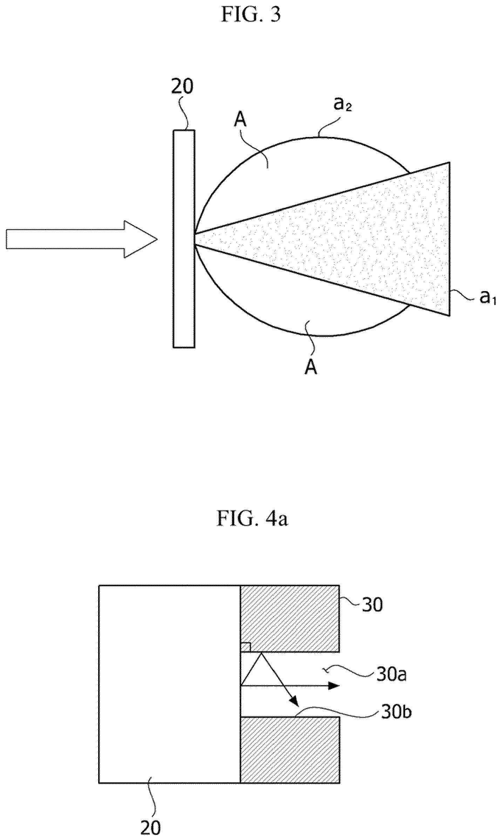

Fig. 3 is a cross sectional view showing light output of a common lighting device.

As shown in Fig. 3, from among the laser rays released from the light source (referred to as 10 in Fig. 1) and incident on the light conversion unit 20, the laser ray which belongs to the blue wavelength band and is transmitted through the light conversion unit 20 forms an area of light distribution a1 according to Gaussian distribution. Moreover, the converted light which is converted by the phosphor plate (referred to as 24 in Fig. 1) forms an area of light distribution a2 according to Lambertian distribution.

That is, the white light is formed in an area in which the laser ray which belongs to the blue wavelength band according to Gaussian distribution and the yellow light according to Lambertian distribution overlap with each other, however, the light which belongs to the yellow wavelength band is released as is in an area A which is outside of the range of the Gaussian distribution. This light which belongs to the yellow wavelength band increases the overall deviation in colors in the light released from the lighting device and generates yellow-based light in the vicinity of the white light.

Referring to Fig. 1 again, the lighting device according to the embodiment is arranged so as to cover some part of the light conversion unit 20, and the housing 30 overlaps with an area which is not the light emitting region of the phosphor plate 24, and thereby a yellow-based light may be blocked.

The opening 30a of the housing 30 may be formed with a structure in which the opening 30a is inclined so as to have a tilting angle θ of less than 90° with respect to the light emitting region of the phosphor plate 24. The opening 30a of the housing 30 may have a shape in which a diameter increases along the direction of progress of the light passing through the light conversion unit 20. That is, the diameter of the opening 30a may increase as the distance from the light conversion unit 20 increases. In this case, the diameter of the opening 30a may be the smallest at the portion in contact with the light conversion unit 20. Thus, the portion of the opening 30a with the smallest diameter may have the same size as a diameter of the light emitting region of the phosphor plate 24.

When the housing 30 includes a material which has good thermal conductivity such as Al, Cu, and the like for radiating heat, the housing 30 may be a Heat sink. In this case, the white light emitted from the light conversion unit 20 may be reflected on the inside surface 30b, and thereby the direction of progress of the white light may be adjusted. On one hand, a metallic material or a reflecting material which can reflect light may be coated only on the inside surface 30b of the housing. However, the structure of the housing is not limited thereto.

The tilting angle θ may be set up based on an oriented angle of the white light emitted from the light conversion unit 20.

For example, the oriented angle of the white light emitted from the light conversion unit 20 is in a range of 150° to 170°, the tilting angle θ of the opening 30a of the housing 30 may be in a range of 20° to 90°.

If the tilting angle θ of the opening 30a of the housing 30 exceeds 90°, the opening 30a of the housing 30 may have a shape in which a diameter decreases along the direction of progress of the light passing through the light conversion unit 20. Thus, undesirably, a sufficient amount of the white light cannot be emitted due to the housing 30. In addition, if the tilting angle θ of the opening 30a of the housing 30 is less than 20°, the white light emitted from the light conversion unit 20 cannot be reflected on the inside surface 30b of the housing 30a. Accordingly, the tilting angle θ of the opening 30a of the housing 30 may be in a range of 20° to 90°, but the range is not limited thereto.

On one hand, the tilting angle θ of the opening 30a of the housing 30 may be set to control a straightness of the white light emitted from the light conversion unit 20.

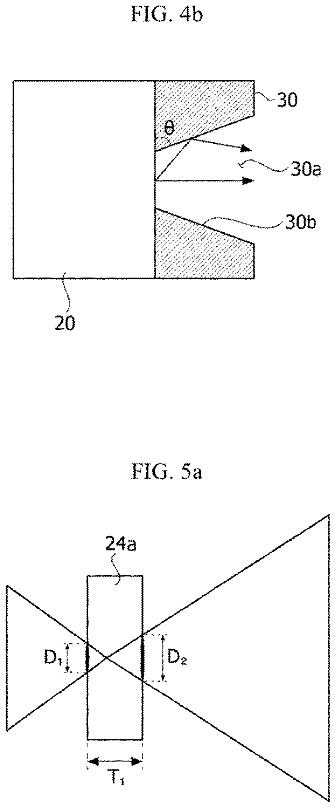

Fig. 4a and Fig. 4b are cross sectional views showing a direction of progress of a white light according to a tilting angle of an opening of a housing.

As shown in Fig. 4a, when the tilting angle θ of the opening 30a of the housing 30 is 90°, the white light emitted from the light conversion unit 20 can be reflected on the inside surface 30b of the housing 30a, and thereby the white light may be dissipated within the opening 30a rather than being emitted to the outside. Further, even if the light reflected on the inside surface 30b of the housing 30 is emitted to the outside, the light cannot progress straight in a horizontal direction.

As shown in Fig. 4b, when the tilting angle θ of the opening 30a of the housing 30 is 60°, the white light emitted from the light conversion unit 20 can be reflected on the inside surface 30b of the housing 30a and the reflected light can have straightness as compared to the case described in Fig. 4a. That is to say, when the tilting angle θ of the opening 30a of the housing 30 becomes smaller, the degree of straightness of the white light emitted from the opening 30a of the housing can be improved.

As described above, however, when the tilting angle θ of the opening 30a of the housing 30 is 20° or less, the white light emitted from the light conversion unit 20 cannot be reflected on the inside surface 30b of the housing 30a.

Accordingly, considering the orientated angle and the straightness of the white light emitted from the light conversion unit 20, the tilting angle θ of the opening 30a of the housing 30 may be greater than 20°, and smaller than 90°. More preferably, the tilting angle θ may be in a range of 20° to 60°, but the range is not limited thereto.

However, although not shown in the figures, the front surface of the phosphor plate 24, which is exposed at the opening 30a of the housing, may be formed of an uneven structure. In this case, the diffusion and the scattering effect of the light may be improved by the uneven structure.

A molding 100 which includes white silicon may be disposed between the housing 30 and the short wavelength pass filter 23. The molding 100 may be disposed to surround a side surface of the phosphor plate 24. The molding 100 may be rendered to include an organic material in which a silicon resin and TiOz are mixed, but the materials are not limited thereto. The molding 100 has reflexibility, thereby reflecting light emitted to the side surface of the phosphor plate 24 and directing the light to the opening 30a of the housing 30.

In general, the performance of the lighting device may be controlled based on a diameter of the light which is emitted from the opening 30a. For example, as a diameter of a light emitting surface of the lighting device becomes smaller, an energy density per area becomes too high and the phosphor plate 24 may be damaged. On the other hand, in order to increase the diameter of the light emitting surface of the lighting device, the diameter of the light incident region of the light which is incident on the phosphor plate 24 must become larger. That is, because there should be a sufficient distance between the light conversion unit 20 and the light source 10, the lighting device becomes larger, and hence it is difficult to miniaturize the structure of the lighting device.

Therefore, the lighting device according to an embodiment of the present invention can control a ratio (D1 : D2) of a diameter D1 of the light incident region of the light which is incident on the phosphor plate 24 and a diameter D2 of the light emitting region of the phosphor plate 24 based on a thickness of the phosphor plate 24. Here, the light incident region and the light emitting region, which face each other, may respectively be disposed on a surface of the phosphor plate 24. That is, the light incident region may be disposed on a first surface (back surface) of the phosphor plate 24, which faces the light source 10. In addition, the light emitting region may be disposed on a second surface (front surface) of the phosphor plate 24, which faces the opening 30a at the opposite side of the first surface. Moreover, a diameter D3 of the opening 30a of the housing 30 may also become larger as the thickness of the phosphor plate 24 increases.

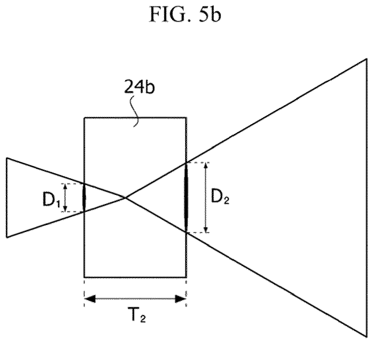

Fig. 5a and Fig. 5b are cross sectional views showing a diameter of a light incident region of light which is incident on a phosphor plate and a diameter of a light emitting region of the phosphor plate.

Even if the diameter D1 of the light incident region of the light which is incident on a first phosphor plate 24a having a first thickness T1 as shown in Fig. 5a and the diameter D1 of the light incident region of the light which is incident on a second phosphor plate 24b having a second thickness T2 which is thicker than the first thickness T1 as shown in Fig. 5b are the same, the diameters D2 of the light emitting region of the first phosphor plate 24a and the second phosphor plate 24b are different from each other. That is because the thicknesses of the first and the second phosphor plates 24a and 24b are different from each other.

The diameter D1 of the light incident region may be adjusted based on the distance between the first phosphor plate 24a and the second phosphor plate 24b. In addition, because the diameter D2 of the light emitting region becomes larger as the thicknesses of the first and the second phosphor plate 24a and 24b increase, the diameter D2 of the light emitting region may be controlled based on the thickness of the phosphor plate 24.

In this case, the first and the second phosphor plates may have the ratio of the diameter of the light incident region and the diameter of the light emitting region which ranges from 1 : 3 to 1 : 9.

In particular, the ratio of the diameter of the light incident region and the diameter of the light emitting region of the phosphor plate is shown below in Table 1.

Table 1 provided below shows the ratio of the diameters of the light incident region and the light emitting region based on the thickness of the phosphor plate.

That is, as shown in Table 1 below, when the ratio of the diameter of the light incident region and the diameter of the light emitting region is 1 : 3 to 1 : 9, at this time, the thickness of the phosphor plate may be of 60 µm to 160 µm . Here, the thickness may be a distance between the back surface (the first surface) and the front surface (the second surface) of the phosphor plate. In particular, as the thickness of the phosphor plate 24 increases, the diameter of the light emitting region increases with respect to the diameter of the light incident region.

**[Table 1]**

| Thickness of phosphor plate (*µ*m) | Diameter of light incident region (D1) : Diameter of light emitting region (D2) |
|---|---|
| 60∼80 | 1:3∼1:4.5 |
| 80∼100 | 1:4.5∼1:5.5 |
| 100∼120 | 1:5.5∼1:6.5 |
| 120∼140 | 1:6.5∼1:7.5 |
| 140∼160 | 1:7.5∼1:9 |

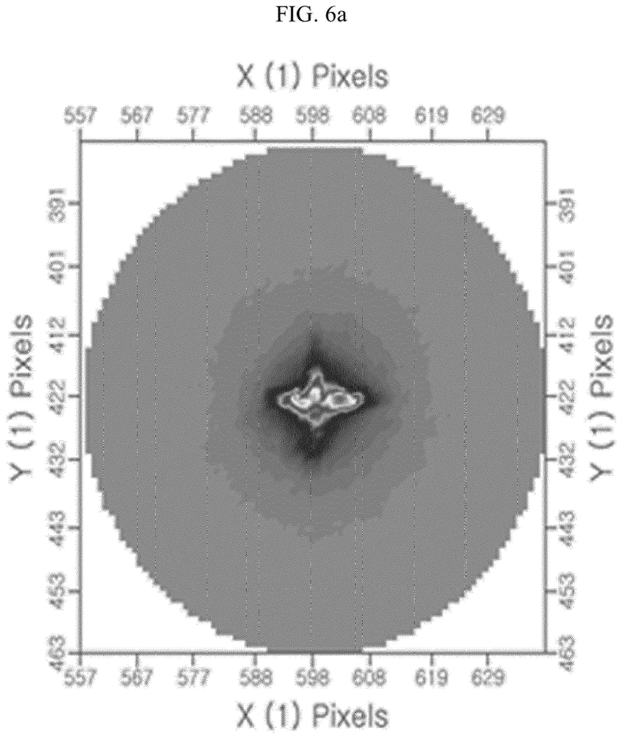

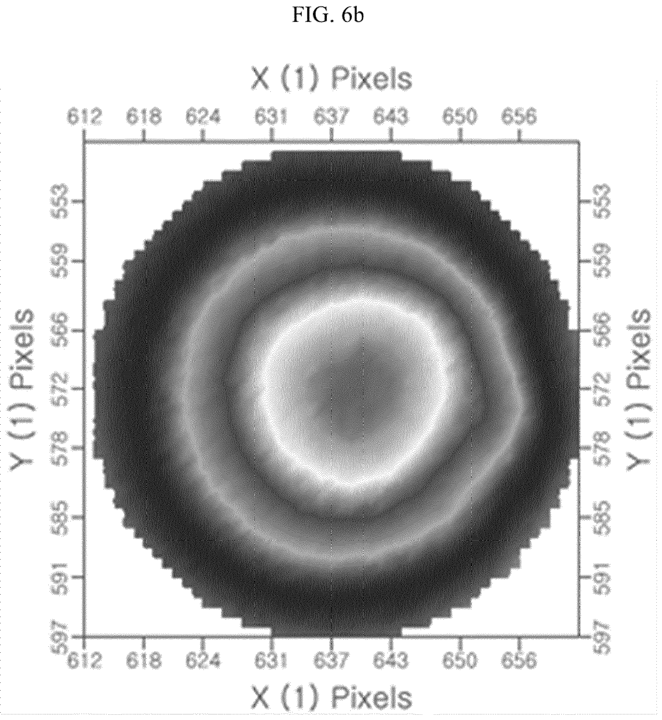

Fig. 6a is a graph showing the diameter of the light incident region of the light which is incident on the phosphor plate, and Fig. 6b is a graph showing the diameter of the light emitting region of the phosphor plate. Fig. 6a and Fig. 6b show diameters of the light incident region and the light emitting region of the phosphor plate 24 having a thickness of 60 *µ*m to 80 *µ*m.

As shown in Fig. 6a, the diameter of the light incident region of the phosphor plate is approximately 80 *µ*m, and as shown in Fig. 6b, the diameter of the light emitting region of the phosphor plate is 320 *µ*m, and hence the ratio of the diameter of the light incident region and the diameter of the light emitting region is approximately 1 : 4.

In general, in order to increase the size of the light emitting region which is emitted from the lighting device, it is necessary to increase the diameter of the light incident region, and accordingly it is necessary to increase the distance between the light source 10 and the phosphor plate 24. In other words, the lighting device becomes larger, i.e. it is difficult to miniaturize the structure of the lighting device. In contrast, for miniaturizing the lighting device, if the distance between the light source 10 and the phosphor plate 24 is decreased, the light incident region of the light which is incident on the phosphor plate 24 becomes too narrow. In this case, energy is concentrated on the phosphor plate 24, and the phosphor plate 24 may be damaged.

Referring to Fig. 1 again, a collimator 40 and a light concentrating unit 50 are further disposed between the light source 10 and the light conversion unit 20. In this case, the collimator 40 is disposed closer to the light source 10 than the light concentrating unit 50.

The collimator 40 releases a laser ray which is output from the light source 10 as a parallel light ray, and the light concentrating unit 50 concentrates the parallel light ray which is released through the collimator 40. The light concentrating unit 40 may refract the laser ray which passes through the collimator 40 and then allow the refracted laser ray to be incident on the light conversion unit 20. The light concentrating unit 50 may consist of a condensing lens, and it may refract the laser light which is incident as a parallel light toward the center of the light conversion unit 20 and allow the laser light to be incident on the light conversion unit 20.

Hereinafter, a method of producing the phosphor plate will be explained in detail in the following.

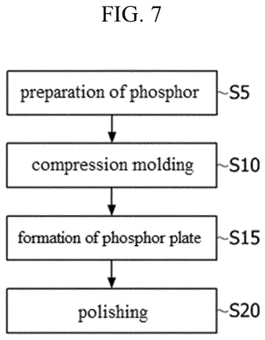

Fig. 7 is a block diagram of a method for producing a phosphor plate.

As shown in Fig. 7, a phosphor in a powder form is prepared S5. The phosphor may be one of yellow, green or red phosphors, and may be two or more types of phosphors that excite light which has different wavelengths, if necessary. For example, the phosphor may be any one type of phosphors selected from a group consisting of a ruthenium aluminum garnet(LuAG)-based, Yttrium Aluminum Garnet(YAG)-based, silicate-based, sulfide-based, and nitride-based phosphor, but the phosphor is not limited thereto.

Next, the phosphors, a binder, and the like are mixed, and compression molding is performed S10 by putting the mixture into a Stainless Use Steel (SUS) mold so as to have a plate or a discus shape. The binder may be selected from at least one type of compound selected from a group consisting of tetraethyl orthosilicate (TEOS), tetramethyl orthosilicate, tetrapropyl orthosilicate, and tetraisopropyl orthosilicate, but the binder is not limited thereto. The binder may also be mixed to enhance strength of the mixture.

The compression molding may be performed at 1 to 5 tons of pressure for 1 to 10 minutes. After the compression molding, cold isostatic pressing (CIP) may further be performed to make a high density molded product. CIP is a process in which a molded product is disposed in an elastic mold immersed in liquids such as water, and the molded product is subjected to have pressure applied from all directions by applying pressure to the liquids, and through the CIP process, the molded product can be pressured to be dense and uniform in shape.

A phosphor plate is formed S15 by performing vacuum firing by putting the compressed mixture into a firing furnace. In this case, a temperature and a time for performing the firing may be adjusted depending on a glass transition temperature of the phosphor. For example, the vacuum firing may be performed at a temperature of 1200°C to 1800°C and a pressure of 10⁻⁵ for 1 to 20 hours.

In order to adjust the thickness and surface roughness of the phosphor plate, a surface of the phosphor plate may be polished S20. In addition, in order to use the phosphor plate with an optical module such as a lighting device, a process such as dicing, drilling, and packaging may further be performed.

In particular, the phosphor plate 24 may further include a ceramic powder. The ceramic powder may prevent being subjected to physical and chemical effects to the phosphor contained in the phosphor plate 24, and allow the phosphor to be uniformly dispersed in the phosphor plate 24. The ceramic powder may be at least one type of silicate-based glass powder selected from a group consisting of sodium borosilicate, aluminosilicate, zinc borosilicate, and Barium sodium silicate, but the ceramic powder is not limited thereto.

The embodiments of the present invention as explained above are not limited to the accompanied embodiments and the drawings as described, and it will be apparent to those of ordinary skill in the art that it is possible to implement various substitutions, variations and modifications on the present invention without departing from the scope of the present invention as defined in the appended claims.

### DESCRIPTION OF REFERENCE NUMERAL

| | | | |
|---|---|---|---|
| 10 : | light source | 20 : | light conversion unit |
| 21 : | substrate | 22 : | antireflection coating |
| 23 : | short wavelength pass filter | 24 : | phosphor plate |
| 24a : | first phosphor plate | 24b : | second phosphor plate |
| 25 : | bonding layer | 30 : | housing |
| 30a : | opening | 30b : | inside surface |
| 40 : | collimator | 50 : | light concentrating unit |
| 100 : | molding | | |

## Claims

1. A lighting device, comprising:
- a light source (10) which generates a laser ray;
- a light conversion unit (20) which includes a phosphor plate (24) having a light incident region disposed on a first surface facing a light emitting surface of said light source (10) and on which the laser ray is incident and a light emitting region disposed on a second surface opposite to the first surface and which outputs a converted light excited by the laser ray;
- a housing (30) which is arranged on the second surface of the light conversion unit (20) and has an opening (30a) which exposes the light emitting region of the phosphor plate (24), and
- a light concentrating unit (50) disposed between the light source (10) and the light conversion unit (20) and concentrating the laser ray emitted from the light source (10) toward the light conversion unit (20),
wherein the light conversion unit (20) further includes:
- a substrate (21) disposed on a back surface of the phosphor plate (24);
- a short wavelength pass filter (23) disposed between the a front surface of the substrate (21) and the phosphor plate (24); and
- a molding (100) which surrounds a side surface of the phosphor plate (24),
wherein the housing (30) is disposed to cover a part of the second surface of the phosphor plate (24), and
wherein the light conversion unit (20) further comprises a collimator (40) disposed between the light source (10) and the light concentrating unit (50),
**characterized in that** the light conversion unit (20) further includes:
- an antireflection coating (22) disposed on a back surface of the substrate, and **in that** the ratio of the diameter of the light incident region of the first surface of the phosphor plate (24) and the diameter of the light emitting region of the second surface of the phosphor plate (24) ranges from 1 : 3 and wherein a distance between the first surface and the second surface is 60*µ*m.

2. The lighting device of claim 1, wherein the housing (30) includes at least one selected from Al or Cu.

3. The lighting device of claim 1, wherein a diameter of the opening (30a) of the housing (30) increases as a distance from the light conversion unit (20) increases.

4. The lighting device of claim 1, wherein the smallest diameter of the opening (30a) of the housing (30) is the same as the diameter of the light emitting region,

5. The lighting device of claim 1, wherein the opening (30a) of the housing (30) has a structure that is inclined so as to have a tilting angle θ which is between 20° and 60° with respect to the light emitting region of the light conversion unit (20).

6. The lighting device of claim 1, wherein an oriented angle of the light which passed through the light conversion unit (20) is between 150° and 170°.

## Patentansprüche

1. Beleuchtungsvorrichtung, umfassend:
- eine Lichtquelle (10), die einen Laserstrahl erzeugt;
- eine Lichtwandlungseinheit (20), die eine Leuchtstoffplatte (24) einschließt, die einen Lichteinfallbereich, der auf einer ersten Oberfläche angeordnet ist, die einer lichtemittierenden Oberfläche der Lichtquelle (10) zugewandt ist und auf die der Laserstrahl einfällt, und einen lichtemittierenden Bereich aufweist, der auf einer zweiten Oberfläche gegenüber der ersten Oberfläche angeordnet ist und die ein gewandeltes Licht ausgibt, das durch den Laser angeregt wird;
- ein Gehäuse (30), das auf der zweiten Oberfläche der Lichtwandlungseinheit (20) eingerichtet ist und eine Öffnung (30a) aufweist, die den lichtemittierenden Bereich der Leuchtstoffplatte (24) freilegt, und
- eine Lichtkonzentrationseinheit (50), die zwischen der Lichtquelle (10) und der Lichtwandlungseinheit (20) angeordnet ist und den von der Lichtquelle (10) emittierten Laserstrahl in Richtung der Lichtwandlungseinheit (20) konzentriert,
wobei die Lichtwandlungseinheit (20) ferner einschließt:
- ein Substrat (21), das auf einer hinteren Oberfläche der Leuchtstoffplatte (24) angeordnet ist;
- einen Passfilter (23) mit kurzer Wellenlänge, der zwischen der einen vorderen Oberfläche des Substrats (21) und der Leuchtstoffplatte (24) angeordnet ist;
- ein Formteil (100), das eine Seitenoberfläche der Leuchtstoffplatte (24) umgibt, wobei das Gehäuse (30) angeordnet ist, um einen Teil der zweiten Oberfläche der Leuchtstoffplatte (24) abzudecken, und
wobei die Lichtwandlungseinheit (20) ferner einen Kollimator (40) umfasst, der zwischen der Lichtquelle (10) und der Lichtkonzentrationseinheit (50) angeordnet ist,
**dadurch gekennzeichnet, dass** die Lichtwandlungseinheit (20) ferner einschließt:
- eine Antireflexionsbeschichtung (22), die auf einer hinteren Oberfläche des Substrats angeordnet ist, und **dadurch, dass** das Verhältnis des Durchmessers des Lichteinfallbereichs der ersten Oberfläche der Leuchtstoffplatte (24) und des Durchmessers des lichtemittierenden Bereichs der zweiten Oberfläche der Leuchtstoffplatte (24) von 1 : 3 reicht und wobei ein Abstand zwischen der ersten Oberfläche und der zweiten Oberfläche 60 µm beträgt.

2. Beleuchtungsvorrichtung nach Anspruch 1, wobei das Gehäuse (30) mindestens eines einschließt, das von Al oder Cu ausgewählt ist.

3. Beleuchtungsvorrichtung nach Anspruch 1, wobei ein Durchmesser der Öffnung (30a) des Gehäuses (30) zunimmt, wenn ein Abstand von der Lichtwandlungseinheit (20) zunimmt.

4. Beleuchtungsvorrichtung nach Anspruch 1, wobei der kleinste Durchmesser der Öffnung (30a) des Gehäuses (30) derselbe wie der Durchmesser des lichtemittierenden Bereichs ist.

5. Beleuchtungsvorrichtung nach Anspruch 1, wobei die Öffnung (30a) des Gehäuses (30) eine Struktur aufweist, die geneigt ist, um einen Kippwinkel θ aufzuweisen, der in Bezug auf den lichtemittierenden Bereich der Lichtwandlungseinheit (20) zwischen 20° und 60° beträgt.

6. Beleuchtungsvorrichtung nach Anspruch 1, wobei ein ausgerichteter Winkel des Lichts, das durch die Lichtwandlungseinheit (20) passiert, zwischen 150° und 170° beträgt.

## Revendications

1. Dispositif d'éclairage comprenant :
- une source de lumière (10) qui génère un rayon laser ;
- une unité de conversion de lumière (20) qui comporte une plaque de phosphore (24) ayant une région d'incidence de lumière disposée sur une première surface orientée vers une surface d'émission de lumière de ladite source de lumière (10) et sur laquelle le rayon laser est incident et une région d'émission de lumière disposée sur une seconde surface opposée à la première surface et qui délivre en sortie une lumière convertie excitée par le rayon laser ;
- un boîtier (30) qui est agencé sur la seconde surface de l'unité de conversion de lumière (20) et a une ouverture (30a) qui expose la région d'émission de lumière de la plaque de phosphore (24), et
- une unité de concentration de lumière (50) disposée entre la source de lumière (10) et l'unité de conversion de lumière (20) et concentrant le rayon laser émis par la source de lumière (10) vers l'unité de conversion de lumière (20),
dans lequel l'unité de conversion de lumière (20) comporte en outre :
- un substrat (21) disposé sur une surface arrière de la plaque de phosphore (24) ;
- un filtre passe de passe d'onde courte (23) disposé entre la surface avant du substrat (21) et la plaque de phosphore (24) ;
- un moulage (100) qui entoure une surface latérale de la plaque de phosphore (24), dans lequel le boîtier (30) est disposé pour couvrir une partie de la seconde surface de la plaque de phosphore (24), et
dans lequel l'unité de conversion de lumière (20) comprend en outre un collimateur (40) disposé entre la source de lumière (10) et l'unité de concentration de lumière (50),
**caractérisé en ce que** l'unité de conversion de lumière (20) comporte en outre :
- un revêtement antireflet (22) disposé sur une surface arrière du substrat,
et **en ce que** le rapport du diamètre de la région d'incidence de lumière de la première surface de la plaque de phosphore (24) et du diamètre de la région d'émission de lumière de la seconde surface de la plaque de phosphore (24) est compris entre 1: 3 et dans lequel une distance entre la première surface et la seconde surface est de 60 µm.

2. Dispositif d'éclairage selon la revendication 1, dans lequel le logement (30) comporte au moins l'un choisi parmi Al ou Cu.

3. Dispositif d'éclairage selon la revendication 1, dans lequel un diamètre de l'ouverture (30a) du boîtier (30) augmente à mesure qu'une distance de l'unité de conversion de lumière (20) augmente.

4. Dispositif d'éclairage selon la revendication 1, dans lequel le plus petit diamètre de l'ouverture (30a) du boîtier (30) est le même que le diamètre de la région d'émission de lumière.

5. Dispositif d'éclairage selon la revendication 1, dans lequel l'ouverture (30a) du boîtier (30) a une structure qui est inclinée de manière à avoir un angle de basculement θ qui est compris entre 20° et 60° par rapport à la région d'émission de lumière de l'unité de conversion de lumière (20).

6. Dispositif d'éclairage selon la revendication 1, dans lequel un angle orienté de la lumière qui passe à travers l'unité de conversion de lumière (20) est compris entre 150° et 170°.
